# FASCICULE DE BREVET EUROPEEN

(11) **EP 2 801 702 B1**
(45) Date de publication et mention de la délivrance du brevet: **06.05.2020**
(21) Numéro de dépôt: 13167301.4
(22) Date de dépôt: 10.05.2013
(51) Int. Cl.: F04D 29/16, F01D 9/04, F01D 25/24, F01D 11/00

(54) **VIROLE INTERNE DE REDRESSEUR DE TURBOMACHINE AVEC JOINT ABRADABLE**
STATOR-INNENRING EINES TURBOTRIEBWERKS MIT ABRIEBMATERIAL
INNER SHROUD OF TURBOMACHINE WITH ABRADABLE SEAL

(43) Date de publication de la demande: 12.11.2014
(73) Titulaire: Safran Aero Boosters SA, 4041 Herstal (BE)
(72) Inventeur: Cortequisse, Jean-François, 3870 Heers (BE)
(74) Mandataire: Lecomte & Partners

(56) Documents cités:
- EP-A1- 1 293 645
- FR-A1- 2 979 662
- US-A1- 2012 301 315
- US-B2- 7 695 244

## Description

### Domaine technique

L'invention a trait à une turbomachine axiale munie d'un compresseur. Plus précisément, l'invention a trait à un étage de compression d'un compresseur de turbomachine axiale. Plus particulièrement, l'invention a trait à l'étanchéité d'un étage de compression d'un compresseur de turbomachine axiale.

### Technique antérieure

Un compresseur de turbomachine axiale comporte généralement plusieurs étages de compression, chacun d'eux étant formé par la réunion d'une rangée d'aubes rotoriques, et d'une rangée d'aubes statoriques. Pour canaliser axialement le flux dans l'étage de compression, ce dernier présente des viroles coaxiales. En particulier, chaque rangée d'aubes statoriques est munie d'une virole interne qui est fixée aux extrémités intérieures des aubes statoriques. Une telle virole interne présente une forme annulaire et encercle le rotor. Un jeu fonctionnel est prévu à leur interface.

En fonctionnement, une fuite peut s'introduire entre le rotor et la virole interne en raison du jeu. Cette fuite tend à réduire la compression effective de chaque étage de compression et réduit la pression en sortie de compresseur. Afin d'améliorer leur pression de sortie, les compresseurs de turbomachines axiales sont pourvus de dispositifs d'étanchéité. Ces dispositifs peuvent être implantés au niveau de chaque étage de compression, à l'interface entre la virole interne et le rotor.

Ils peuvent comprendre une couche annulaire de matériau abradable qui est avantageusement implantée sur le stator dans le but de réduire la masse tournante. Elle est destinée à coopérer par abrasion avec des léchettes ou lamelles annulaires qui sont formées sur la surface extérieure du rotor. Afin d'économiser de la matière, la couche de matériau abradable peut être scindée en deux couches annulaires. Elles sont disposées en amont et en aval de la virole interne. Cette dernière peut présenter une forme de « U » inversé dont les extrémités intérieures de branches supportent les couches de matériau abradable. Cette forme de « U » constitue un évidement qui permet de gagner de la masse.

Le document US 7,695 ,244 B2 divulgue un étage de compression de turbomachine, conforme au préambule de la revendication. La virole interne est formée d'une plate-forme centrale et de deux prolongements radiaux se terminant par des retours. Les retours présentent chacun des bandes annulaires de matériau abradable qui sont destinées à entrer en contact de léchettes radiales formées sur un rotor. La plateforme, les prolongements et les retours définissent une cavité importante par rapport à l'espace délimité entre les léchettes. Cette configuration de cavité forme un réservoir permettant d'endiguer une fuite localisée et brève. Or, elle ne permet pas d'améliorer significativement l'étanchéité entre la virole intérieure et le rotor en régime stable.

### Résumé de l'invention

### Problème technique

L'invention a pour objectif de résoudre au moins un de problèmes techniques présenté par l'art antérieur. Plus précisément, l'invention a pour objectif d'augmenter la pression de sortie d'un compresseur axial muni de redresseurs avec des viroles internes coopérant avec la surface externe du rotor. Plus précisément, l'invention a pour objectif de réduire les fuites dans un étage de compression d'un compresseur axial. L'invention a également pour objectif d'alléger un compresseur de turbomachine axiale.

### Solution technique

L'invention a trait à un étage de compression de turbomachine axiale, comprenant un rotor avec sur sa surface extérieure au moins deux léchettes formant chacune une nervure radiale annulaire ; et un redresseur qui comporte une rangée annulaire d'aubes statoriques s'étendant essentiellement radialement ; et une virole interne dont la section radiale comprend une portion centrale reliée au niveau des extrémités internes des aubes, une portion latérale s'étendant de chaque côté de la portion centrale jusqu'à une des au moins deux léchettes, respectivement, formant ainsi avec le rotor une cavité annulaire ; remarquable en ce que la virole et le rotor sont configurés de manière à ce que la section radiale de la cavité annulaire présente une longueur L1 et une hauteur H, la longueur L1 étant supérieure à la hauteur H ; et chacune des portions latérales comporte une sous-portion axiale, lesdites sous-portions s'étendant dans des sens opposés jusqu'aux léchettes, respectivement, et/ou lesdites portions latérales s'écartent l'une de l'autre depuis la portion centrale vers le rotor.

La longueur L1 de la section radiale de la cavité est mesurée suivant l'axe de rotation de l'étage de compression, la hauteur H de la section radiale de la cavité est mesurée suivant la direction radiale.

La cavité annulaire est une enceinte dans laquelle un flux circulaire est généré par la surface extérieure du rotor. La vitesse du flux circulaire permet d'y abaisser la pression afin de réduire les fuites vers l'extérieur. De plus, la forme allongée de la section radiale de la cavité annulaire permet d'amortir les fuites localisées et brèves qui peuvent tenter de repasser sous la virole interne. L'allongement de la cavité annulaire permet d'augmenter l'efficacité de la mise en mouvement de l'air s'y trouvant. En réduisant la hauteur de la cavité par rapport à sa longueur, la proportion de l'air de la cavité mis en mouvement est augmentée, tout comme la vitesse moyenne croît cet air.

Suivant un mode avantageux de l'invention, la longueur L1 de la cavité annulaire est supérieure au double, préférentiellement au triple de la hauteur H de ladite cavité.

Suivant un mode avantageux de l'invention, la virole interne est réalisée en matériau composite.

Suivant un mode avantageux de l'invention, la hauteur H de la cavité annulaire est constante sur la majorité de sa longueur, préférentiellement sur plus 70% de sa longueur, plus préférentiellement sur plus de 80%.

Suivant un mode avantageux de l'invention, les extrémités des portions latérales présentent des gorges annulaires internes configurées pour recevoir une couche de matériau abradable, préférentiellement les gorges annulaires ont des sections de « U » inversé, ou de « L » inversé, préférentiellement l'étage comprend des couches de matériau abradable placées dans les gorges annulaires.

Suivant un mode avantageux de l'invention, les extrémités intérieures des aubes s'étendent à l'intérieur de la virole interne.

Les portions latérales et/ou les portions axiales délimitent des chambres annulaires. Ces chambres annulaires débouchent l'une sur l'autre et/ou sur la cavité. Bien qu'elles communiquent, la circulation axiale sous la virole interne est ralentie par les goulots circulaires qui délimitent ces chambres et la cavité annulaire. Ainsi, un flux qui les traverse subira une série de pertes de charges qui réduira sa progression.

La présence des aubes sous la virole interne forme des obstacles aérodynamiques sous la virole interne. En combinaison avec le flux rotatif dans la cavité annulaire qui est entrainé par le rotor, de nouvelles perturbations sont créées. Celles-ci augmentent la vitesse absolue du fluide, ce qui en abaisse encore la pression.

Suivant un mode avantageux de l'invention, les cordes des extrémités des aubes sous la virole interne sont inclinées par rapport à l'axe de rotation du rotor de plus de 5°, préférentiellement plus de 10°, plus préférentiellement plus de 25°.

L'inclinaison des cordes des aubes par rapport à l'axe de rotation du compresseur force une partie du flux à contourner la partie de l'aube sous la virole interne par l'amont. Cet écoulement présente également des vortex qui abaissent à nouveau la pression dans la cavité annulaire.

Suivant un mode avantageux de l'invention, le rotor présente un voile avec un profil de révolution qui comprend une première portion disposée en regard de la surface intérieure de la virole et une deuxième portion surélevée par rapport à la première portion, configurée pour servir de support de fixation à une rangée annulaire d'aubes rotoriques, et une jonction reliant la première portion à la deuxième portion, la deuxième portion recouvrant axialement au moins partiellement une des portions latérales de la virole interne, le voile comprenant préférentiellement une troisième portion surélevée par rapport à la première portion et opposée à la deuxième portion, ladite troisième portion recouvrant axialement au moins partiellement l'autre des deux portions latérales de la virole.

Suivant un mode avantageux de l'invention, la troisième portion recouvre axialement la majorité de la portion latérale associée, préférentiellement elle la recouvre sur plus de 80%, plus préférentiellement elle la recouvre sur plus de 95%.

Suivant un mode avantageux de l'invention, la troisième portion s'étend axialement jusqu'au niveau de la portion centrale située en regard.

Suivant un mode avantageux de l'invention, une des portions latérales s'étend axialement jusqu'à la jonction à une distance D2, préférentiellement la jonction est une première jonction et le profil du voile rotor comprend une deuxième jonction à l'opposé de la première jonction par rapport à la virole interne, l'autre des deux portions latérales de la virole s'étendant axialement jusqu'à la deuxième jonction à une distance D2.

Suivant un mode avantageux de l'invention, la hauteur des léchettes est inférieure à 50%, préférentiellement 30%, plus préférentiellement 15% de la hauteur des portions latérales de la virole.

Suivant un mode avantageux de l'invention, la surface extérieure du rotor formant la cavité annulaire présente une rugosité Ra supérieure à 2 µm, préférentiellement supérieure à 6,4 µm, plus préférentiellement supérieure à 15 µm pour entrainer l'air présent dans ladite cavité. La rugosité Ra correspond à la moyenne intégrale des écarts en valeur absolue.

Suivant un mode avantageux de l'invention, la distance D3 entre les extrémités intérieures des aubes statoriques et le rotor est égale à l'épaisseur des couches de matériaux abradables mesuré au droit des léchettes, préférentiellement la distance D3 est sensiblement supérieure à l'épaisseur des couches de matériaux abradables, préférentiellement encore la distance D3 est comprise entre 0,50 mm et 5,00 mm.

Suivant un mode avantageux de l'invention, le rotor comprend un voile qui s'étend essentiellement axialement entre les léchettes.

La configuration de l'étage de compresseur permet de raccourcir les léchettes. Lorsque ces dernières sont réalisées en métal, et que la virole est en matériau composite, l'ensemble devient plus léger.

Suivant un mode avantageux de l'invention, les portions latérales sont configurées pour effleurer les léchettes lors du fonctionnement de l'étage suivant des conditions de fonctionnement prédéfinies.

Suivant un mode avantageux de l'invention, la portion centrale et les portions latérales s'étendent essentiellement de manière rectiligne, les portions latérales étant inclinées par rapport à la portion centrale.

Suivant un mode avantageux de l'invention, les portions latérales sont inclinées de plus de 20° par rapport à la portion centrale, préférentiellement plus de 45°, plus préférentiellement plus de 60°.

Suivant un mode avantageux de l'invention, la virole est segmentée.

Suivant un mode avantageux de l'invention, la section radiale de la virole présente une continuité de matière.

Suivant un mode avantageux de l'invention, la section radiale de la virole est essentiellement fine, son épaisseur est inférieure à 5,00 mm, préférentiellement inférieure à 2,00 mm.

Suivant un mode avantageux de l'invention, entre les léchettes la surface extérieure du rotor est essentiellement cylindrique ou conique.

Suivant un mode avantageux de l'invention, la distance D2 est comprise entre 1,00 mm et 10,00 mm, préférentiellement entre 2,00 mm et 5,00 mm.

Suivant un mode avantageux de l'invention, les surfaces extérieures de la troisième portion du voile du rotor et de la portion centrale de la virole intérieure sont dans le prolongement l'une de l'autre en fonctionnement.

Suivant un mode avantageux de l'invention, au repos les extrémités radiales intérieures des portions latérales s'étendent axialement jusqu'au niveau de la jonction du profil du voile du rotor, préférentiellement à moins de 5,00 mm, plus préférentiellement à moins de 2,00 mm, plus préférentiellement à moins de 0,50 mm.

Suivant un mode avantageux de l'invention, la surface du rotor entre les jeux de léchettes est brute d'usinage ou sablée.

L'invention a également trait à un compresseur axial avec au moins un étage de compression, remarquable en ce que l'étage de compression est conforme à l'invention.

L'invention a également trait à une turbomachine axiale, telle qu'un turbopropulseur, comprenant un compresseur avec au moins un étage de compression, remarquable en ce que le ou au moins un étage de compression est conforme à l'invention.

Suivant un mode avantageux de l'invention, la turbomachine comprend un carter cylindrique s'étendant axialement le long du rotor, le rotor comprend un tambour monobloc et le carter comprend essentiellement deux demi-coquilles, ou le rotor et le carter comportent tous deux des segments axiaux assemblés axialement.

### Avantages apportés

L'invention permet de réduire les fuites entre la virole interne et le rotor. La forme de la cavité annulaire amortit et ralentit la progression d'un flux localisé tentant de circuler vers l'amont. Son allongement augmente la distance à parcourir pour s'en échapper.

Les prolongements sous la virole interne permettent de modifier l'écoulement circonférentiel dans la cavité annulaire. Les recirculations, les tourbillons formés s'opposent aux fuites en diminuant la pression dans la cavité.

Le choix des matériaux, conjugué à l'architecture proposée par l'invention permettent d'alléger l'étage grâce à la diminution de quantité de matériaux résistant nécessaire. La réduction de la hauteur des léchettes permet également de réaliser une économie de matière première. Les coûts de fabrication peuvent également être réduits car l'accès axial aux plateformes est simplifié, par exemple pour y réaliser des usinages.

### Brève description des dessins

La figure 1 représente une turbomachine axiale selon l'invention.

La figure 2 est un schéma d'un compresseur de turbomachine selon l'invention.

La figure 3 illustre un étage de compression d'un compresseur selon un premier mode de réalisation de l'invention.

La figure 4 illustre un étage de compression d'un compresseur selon un deuxième mode de réalisation de l'invention.

La figure 5 est une coupe de l'étage selon l'axe 5-5 tracé sur la figure 4.

La figure 6 est une vue depuis l'intérieur d'une virole interne selon le deuxième mode de réalisation de l'invention.

### Description des modes de réalisation.

Dans la description qui va suivre, les termes intérieur et extérieur renvoient à un positionnement par rapport à l'axe de rotation d'une turbomachine axiale.

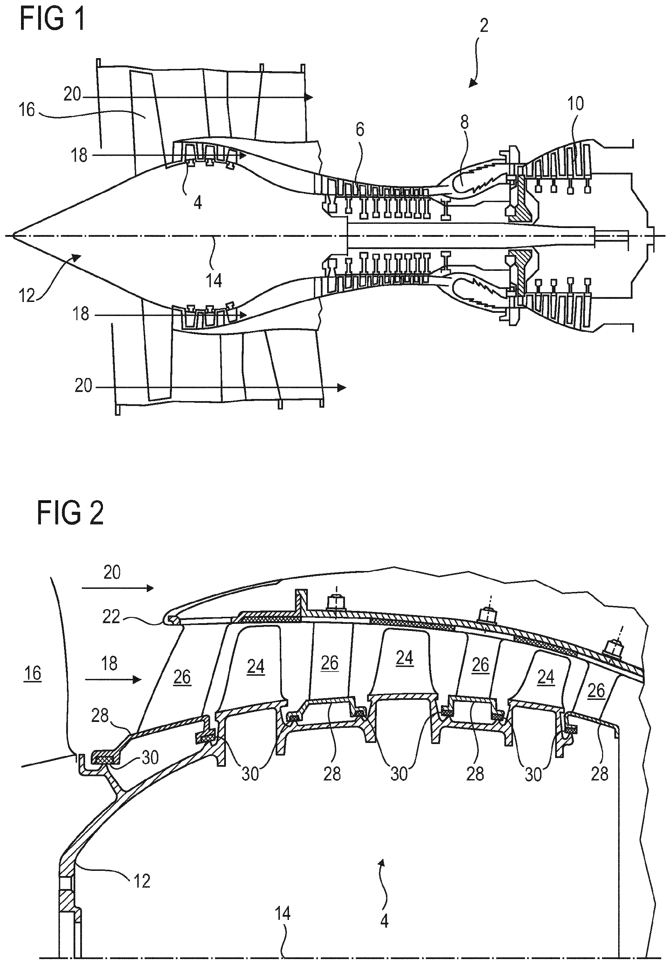

La figure 1 schématise une turbomachine axiale. Il s'agit dans ce cas précis d'un turbopropulseur 2 double-flux, il pourrait également s'agir d'un turboréacteur 2. Le turbopropulseur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur basse-pression 4 d'une turbomachine axiale 2 telle que celle de la figure 1. On peut y observer une partie du fan 16 et le bec de séparation 22 du flux primaire 18 et du flux secondaire 20. Le rotor 12 comprend plusieurs rangées d'aubes rotoriques 24, par exemple trois. Le compresseur basse pression 4 comprend plusieurs redresseurs, par exemple quatre, qui contiennent chacun une rangée d'aubes statoriques 26.

Aux extrémités intérieures de ces dernières est fixée une virole interne 28. Elle présente une forme générale de révolution tel un tube. Sa surface extérieure permet de guider le flux primaire 18. Pour réduire les fuites entre le rotor 12 et un redresseur, des couches de matériau abradable 30 sont disposées du côté intérieur des viroles internes 28. Elles sont destinées à coopérer par abrasion avec le rotor 12 lors de son fonctionnement. Elles y creusent des sillons circulaires et forment des labyrinthes permettant d'améliorer l'étanchéité. Ce même matériau peut être employé pour permettre une étanchéité entre les extrémités externes des aubes rotoriques 24 et la surface intérieure du carter du compresseur.

Les redresseurs sont associés au fan 16 ou à une rangée d'aubes rotoriques pour redresser le flux d'air, de sorte à convertir la vitesse du flux en pression. La réunion d'un redresseur et du fan 16 ou d'une rangée d'aubes rotoriques forme un étage de compression.

Le rotor 12 présente une forme cylindrique, ou de tambour creux. Il présente un voile essentiellement fin, son épaisseur peut être généralement inférieure à 8,00 mm, préférentiellement inférieure à 5,00 mm, encore plus préférentiellement inférieure à 2,00 mm. Le voile présente une symétrie de révolution. Suivant une alternative de l'invention, le rotor peut comprendre des disques avec des aubes sur sa circonférence.

Le rotor 12 peut être réalisé en matériau métallique tel du titane ou de l'aluminium. Il peut également être réalisé en matériaux composites. Il peut être dimensionné de sorte à autoriser des déformations liées, par exemple, à la force centrifuge qui s'exerce directement sur lui, ou qu'il subit via des aubes rotoriques 24 qu'il supporte. Sa dilatation peut également être prise en compte.

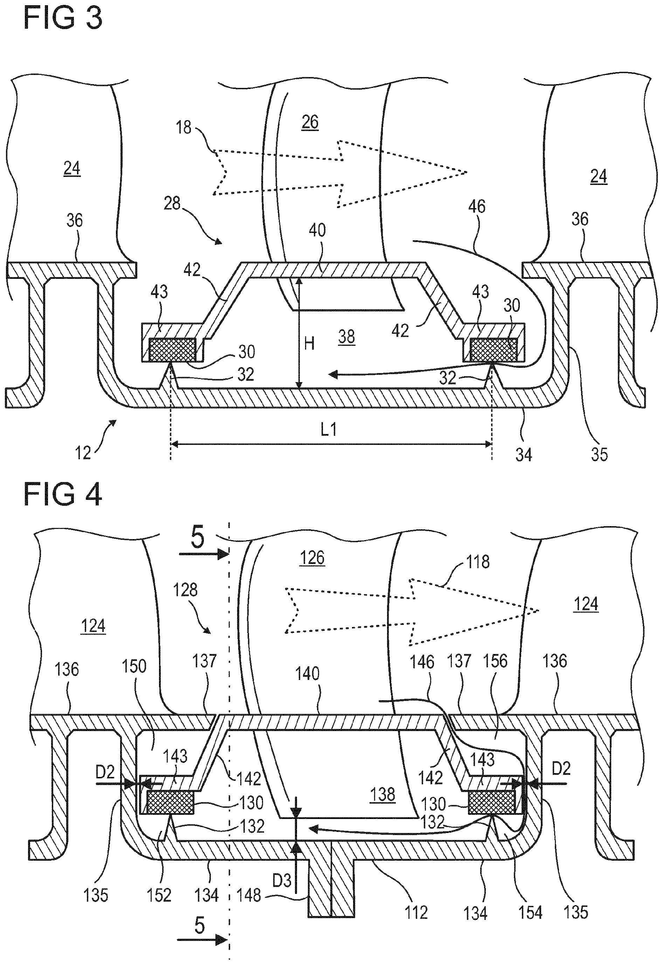

La figure 3 est une illustration d'un étage de compression du compresseur de la turbomachine 2 selon un premier mode de réalisation de l'invention. Le compresseur peut être un compresseur basse pression. Le rotor 12 comprend un tambour monobloc, le redresseur comprenant un carter formé par deux demi-coquilles qui sont réunies une fois que le rotor est assemblé.

Le voile du rotor est structurant et présente une forme de révolution. Son profil de révolution présente des parties qui s'étendent essentiellement axialement ou radialement. Il comprend une première portion 34 qui s'étend axialement et qui est disposée en regard de la surface intérieure de la virole interne 28. Le profil du voile comprend également une deuxième portion 36 qui s'étend essentiellement axialement et qui sert de support de fixation aux aubes rotoriques 24. En amont, la deuxième portion 36 chevauche axialement la première portion 34. Le profil présente également une jonction 35 s'étendant essentiellement radialement et qui relie la première portion 34 et la deuxième portion 36. Le rotor présente ainsi un profil avec une forme de la lettre grecque « Pi ».

La forme du voile permet de ménager des gorges annulaires intérieure et extérieure, la profondeur de la gorge extérieure permettant de loger dans son épaisseur la virole intérieure 28. Dans cette configuration, les surfaces extérieures de la virole interne 28 et de la deuxième portion 36 sont dans le prolongement l'une de l'autre.

L'étage présente une aube statorique 26 et une aube rotorique 24 disposée en aval. Suivant d'autres considérations, un étage peut également être formé avec une aube rotorique disposée en amont. La surface extérieure du rotor 12 présente des léchettes annulaires 32. Elles forment des nervures annulaires s'étendant sur la circonférence du rotor 12 selon un plan perpendiculaire à l'axe de rotation 14. L'étage de compression présente essentiellement deux jeux de léchettes 32, l'un étant situé du côté amont de la virole interne 28, l'autre du côté aval. Un jeu de léchettes peut comprendre une ou plusieurs léchettes.

La virole intérieure 28 comprend une paroi essentiellement fine, ce qui permet de gagner de la masse. Elle est avantageusement réalisée en un matériau composite afin d'accroître ce gain tout en restant rigide. Elle présente une section radiale avec une portion centrale 40 et une portion latérale 42 de chaque côté. La portion centrale 40 est reliée à l'extrémité intérieure de l'aube 26. Les portions latérales 42 s'étendent axialement et radialement depuis la portion centrale 40 jusqu'aux léchettes 32. Elles s'écartent l'une de l'autre vers l'intérieur.

Les portions latérales 42 comprennent des sous-portions latérales 43. Elles sont disposées au niveau de leurs extrémités internes. Elles s'étendent axialement dans des sens opposés, vers l'extérieur de la cavité annulaire. Elles recouvrent chacune un jeu de léchettes.

Les extrémités intérieures des portions latérales 42 présentent des gorges annulaires internes dont les ouvertures donnent sur les léchettes 32. Elles sont avantageusement remplies de couches de matériau abradable 30. Elles sont avantageusement réalisées sur les extrémités axiales des sous-portions latérales 43. Alternativement, les extrémités intérieures des portions latérales présentent des surfaces essentiellement cylindriques recevant chacune une couche de matériau abradable.

Lors du montage, les léchettes 32 restent à distance des couches de matériau abradable 30, par exemple à plus de 1,00 mm, préférentiellement plus de 3,00 mm. En fonctionnement standard, elles sont destinées à effleurer les couches d'abradable 30, et peuvent s'enfoncer dedans de 0,02 mm par exemple. Ce mode de fonctionnement correspond par exemple à un régime moteur donné, avec des conditions atmosphériques données. La force centrifuge et la dilatation contribuent à ce que les léchettes 32 et les couches d'abradable 30 s'effleurent. Le rapprochement des léchettes et des couches d'abradable 30 permet de conserver une étanchéité malgré les déformations. Cette solution permet également de conserver cette étanchéité, même après certains aléas de fonctionnement.

Lorsque la turbomachine est montée sur un véhicule tel un aéronef, celui-ci peut être soumis à des aléas de fonctionnement particuliers qui influent sur le comportement de la turbomachine 2. L'aéronef peut changer d'orientation en piquant ou en tournant. La force gyroscopique s'oppose alors au changement d'orientation et fait pivoter le rotor par rapport au carter. Ceci a pour conséquence de rapprocher localement les léchettes 32 des couches de matériau abradable 30. En phase de vol, le fan 16 de la turbomachine peut être soumis à un vent latéral. Celui-ci exerce un effort qui tend à désaxer le rotor par rapport au carter. Ce mode de fonctionnement tend également à rapprocher localement les léchettes 32 des couches d'abradable 30 associées. Encore en fonctionnement, la turbomachine peut vibrer. Ces vibrations peuvent s'observer sur la paroi du rotor. Celle-ci peut alors se déformer axialement et/ou radialement. L'amplitude des vibrations peut entrainer des contacts marqués entre les couches d'abradable 30 et les léchettes 32.

Entre les léchettes 32, la surface extérieure du rotor 12 et la surface intérieure de la virole interne 28 délimitent une cavité annulaire 38. Elle présente une section radiale de révolution plus longue que haute. Préférentiellement, la longueur L1 de la section radiale est supérieure au double de sa hauteur, plus préférentiellement supérieur au quadruple. Une fuite aval 46 tentant de regagner le côté amont du redresseur devra parcourir une distance plus importante. En cas de fuite ponctuelle, cette longueur formera un coussin amortisseur contre la fuite.

Le rapport entre la longueur et la hauteur de la section radiale de la cavité annulaire 38 favorise la mise en mouvement de l'air qui s'y trouve. L'air tourne dans la virole interne 28. Sa vitesse moyenne suivant une circulation circonférentielle augmente. En effet, cet air est en contact de la surface extérieure du rotor qui l'entraine par friction. Pour augmenter l'efficacité de cet entrainement, cette surface présente avantageusement des aspérités. Elle peut rester brute après une ébauche d'usinage ou être sablée.

La vitesse de l'air dans la cavité annulaire permet d'en diminuer la pression. Cette particularité physique réduit l'importance des fuites 46 qui passent en amont du redresseur. En effet, cette dépression dans la cavité permet d'approcher la pression amont du redresseur, et éventuellement d'être inférieur à cette pression.

La figure 4 est une illustration d'un étage de compression du compresseur de la turbomachine selon un deuxième mode de réalisation de l'invention. Le compresseur peut être un compresseur basse pression. Cette figure 4 reprend la numérotation des figures précédentes pour les éléments identiques ou similaires, la numérotation étant toutefois incrémentée de 100. Des numéros spécifiques sont utilisés pour les éléments spécifiques à ce mode de réalisation.

Le rotor 112 est formé de plusieurs segments cylindriques coaxiaux qui sont disposés axialement les uns à la suite des autres. Ils peuvent être assemblés à l'aide de brides radiales 148. Le rotor 112 peut comprendre des disques coaxiaux. Le stator comprend plusieurs redresseurs dont les viroles extérieures sont disposées axialement les unes à la suite des autres de sorte à former le carter extérieur du compresseur. L'assemblage des redresseurs et des segments de rotor s'effectue tour à tour.

Le profil du voile du rotor comprend au moins une troisième portion 137, préférentiellement deux. La troisième portion est dans le prolongement axial de la deuxième portion 136. Elle s'étend axialement jusqu'à la portion centrale 140 de la virole interne 128. La portion latérale 142 s'étend axialement jusqu'au niveau de la jonction 135 en restant en retrait d'une distance D2 afin d'autoriser des déplacements ou des déformations de fonctionnement.

Le rotor présente deux rangées annulaires d'aubes rotoriques 124 disposée en amont et en aval du redresseur. Le voile du rotor y présente également un profil de révolution avec deux deuxièmes portions 136 et deux jonctions 135 qui peuvent différer géométriquement. Les deuxièmes portions 136 s'étendent axialement jusqu'à la portion centrale 140 de la virole interne 128, et les portions latérales 142 s'étendent axialement jusqu'au niveau des jonctions 135 en restant en retrait d'une distance D2. La distance D2 offre une sécurité de fonctionnement et autorise des déformations du rotor et du carter.

Ainsi, l'environnement de la virole interne 128 est partagé en plusieurs parties annulaires dont la veine primaire, la cavité annulaire 138 et des chambres annulaires parmi lesquelles :
- une chambre annulaire amont supérieure 150,
- une chambre annulaire amont inférieure 152,
- une chambre annulaire aval inférieure 154, et
- une chambre annulaire aval supérieure 156.

Ces chambres inférieures et supérieures sont délimitées par des fentes circulaires qui constituent des obstacles à la circulation de fuites 146. Les chambres annulaires supérieures sont séparées du flux primaire par des fentes circulaires également aptes à réduire les fuites. L'agencement des chambres et l'orientation des fentes circulaires imposent des changements de directions brusques ou pertes de charges à la fuite 146 qui la freine.

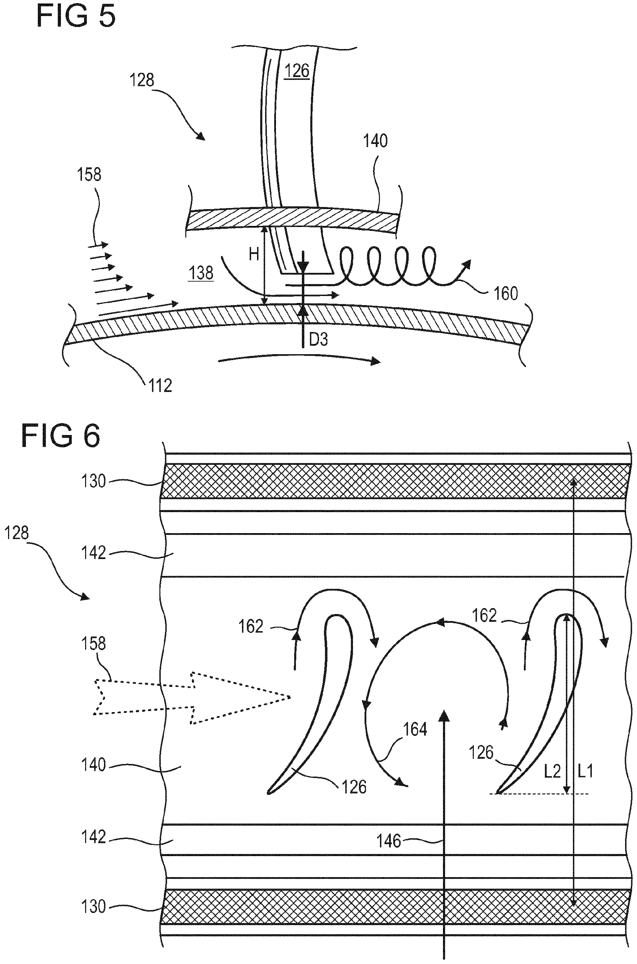

La figure 5 est une coupe d'une partie d'un étage de compression selon l'axe 5-5 tracé sur la figure 4.

La virole intérieure montre une portion centrale 140 à laquelle est fixée une aube statorique 126. Son extrémité intérieure s'étend radialement vers l'intérieur, à proximité de la surface extérieure du rotor 112 et en reste à une distance D3. La distance D3 est comprise entre 0,10 mm et 20,00 mm, préférentiellement comprise entre 2,00 mm et 10,00 mm, plus préférentiellement comprise entre 3,00 mm et 5,00 mm. La distance D3 est inférieure ou égale à l'épaisseur des couches de matériau abradable. Elle autorise ainsi des déformations radiales du rotor et du stator. La longueur des extrémités internes des aubes situées sous la surface intérieure de la virole interne représente plus de 40% de la hauteur de la cavité annulaire, préférentiellement plus de 70%, plus préférentiellement plus de 90%.

Lors de sa rotation, le rotor entraine le flux rotatif 158 dans la cavité annulaire 138. Il rencontre l'extrémité de l'aube statorique 126 et la contourne partiellement par le dessous, entre son extrémité intérieure et le rotor. Le flux circulaire 158 passe par la fente ainsi formée et s'écoule en formant des tourbillons 160. Ces derniers contribuent à s'opposer à une fuite, par exemple une fuite locale.

L'enseignement de qui vient d'être apporté peut être appliqué au premier mode de réalisation de l'invention.

La figure 6 est une illustration d'une virole intérieure selon le deuxième mode de réalisation de l'invention. L'illustration est tracée vue depuis le rotor.

La virole intérieure montre une portion centrale 140 à laquelle sont fixées les aubes statoriques 126. Leurs extrémités internes s'étendent radialement vers l'intérieur depuis la surface intérieure de la virole interne et forment des obstacles à l'intérieur de la cavité annulaire. Plus les extrémités de ces aubes se rapprochent du rotor, plus elles permettent d'influer sur le flux circulaire 158 à l'intérieur de la cavité annulaire.

La longueur axiale L2 des aubes représente plus de 20% de la longueur L1 de la cavité annulaire, préférentiellement plus de 40%, plus préférentiellement plus de 60%. Par ailleurs, les extrémités des aubes statoriques 126 présentent une corde de biais par rapport au flux rotatif 158, ce qui impose à une partie de ce flux de les contourner d'un même côté, par exemple par l'amont. Les flux de contournement 162 générés au niveau de deux aubes peuvent entrainer un tourbillon 164 entre leurs extrémités. L'apparition du tourbillon 164 peut s'opposer à la circulation d'une fuite 146, par exemple d'une fuite ponctuelle. Cette particularité de l'invention contribue donc à améliorer l'étanchéité entre le redresseur et le rotor.

L'enseignement de qui vient d'être apporté peut être appliqué au premier mode de réalisation de l'invention.

## Revendications

1. Etage de compression de turbomachine (2) axiale, comprenant :
- un rotor (12 ; 112) avec sur sa surface extérieure au moins deux léchettes (32 ; 132) formant chacune une nervure radiale annulaire ; et
- un redresseur qui comporte :
∘ une rangée annulaire d'aubes statoriques (26; 126) s'étendant essentiellement radialement ; et
∘ une virole interne (28 ; 128) dont la section radiale comprend une portion centrale (40 ; 140) reliée au niveau des extrémités internes des aubes (26 ; 126), une portion latérale (42 ; 142) s'étendant de chaque côté de la portion centrale jusqu'à une des au moins deux léchettes (32 ; 132), respectivement, formant ainsi avec le rotor une cavité annulaire ;
**caractérisé en ce que**
la virole et le rotor sont configurés de manière à ce que la section radiale de la cavité annulaire (38; 138) présente une longueur L1 et une hauteur H, la longueur L1 étant supérieure à la hauteur H ; et
chacune des portions latérales (42 ; 142) comporte une sous-portion axiale (43 ; 143), lesdites sous-portions (43 ; 143) s'étendant dans des sens opposés jusqu'aux léchettes (32 ; 132), respectivement, et/ou lesdites portions latérales (42 ; 142) s'écartent l'une de l'autre depuis la portion centrale vers le rotor.

2. Etage selon la revendication 1, **caractérisé en ce que** la longueur L1 de la cavité annulaire (38; 138) est supérieure au double, préférentiellement au triple de la hauteur H de ladite cavité.

3. Etage selon l'une des revendications 1 et 2 **caractérisé en ce que** la virole interne (28 ; 128) est réalisée en matériau composite.

4. Etage selon l'une des revendications 1 à 3, **caractérisé en ce que** la hauteur H de la cavité annulaire (38 ; 138) est constante sur la majorité de sa longueur, préférentiellement sur plus 70% de sa longueur, plus préférentiellement sur plus de 80%.

5. Etage selon l'une des revendications 1 à 4, **caractérisé en ce que** les extrémités des portions latérales (38 ; 138) présentent des gorges annulaires internes configurées pour recevoir une couche de matériau abradable (30 ; 130), préférentiellement les gorges annulaires ont des sections de « U » inversé, ou de « L » inversé, préférentiellement l'étage comprend des couches de matériau abradable (30 ; 130) placées dans les gorges annulaires.

6. Etage selon l'une des revendications 1 à 5, **caractérisé en ce que** les extrémités intérieures des aubes (26 ; 126) s'étendent à l'intérieur de la virole interne (26 ; 126).

7. Etage selon l'une des revendications 1 à 6, **caractérisé en ce que** le rotor (112) présente un voile avec un profil de révolution qui comprend une première portion (134) disposée en regard de la surface intérieure de la virole (128) et une deuxième portion (136) surélevée par rapport à la première portion (134), configurée pour servir de support de fixation à une rangée annulaire d'aubes rotoriques (124), et une jonction (135) reliant la première portion (134) à la deuxième portion (136), la deuxième portion (136) recouvrant axialement au moins partiellement une des portions latérales (142) de la virole interne, le voile comprenant préférentiellement une troisième portion (137) surélevée par rapport à la première portion et opposée à la deuxième portion, ladite troisième portion (137) recouvrant axialement au moins partiellement l'autre des deux portions latérales (142) de la virole.

8. Etage selon la revendication 7, **caractérisé en ce qu'**une des portions latérales (142) s'étend axialement jusqu'à la jonction (135) à une distance D2, préférentiellement la jonction (135) est une première jonction (135) et le profil du voile du rotor comprend une deuxième jonction (135) à l'opposé de la première jonction (135) par rapport à la virole interne (128), l'autre des deux portions latérales (142) de la virole s'étendant axialement jusqu'à la deuxième jonction (135) à une distance D2.

9. Etage selon l'une des revendications 1 à 8, **caractérisé en ce que** la hauteur des léchettes (32, 132) est inférieure à 50%, préférentiellement 30%, plus préférentiellement 15% de la hauteur des portions latérales (42, 142) de la virole.

10. Etage selon l'une des revendications 1 à 9, **caractérisé en ce que** la surface extérieure du rotor (12, 112) formant la cavité annulaire (38; 138) présente une rugosité Ra supérieure à 2 µm, préférentiellement supérieure à 6,4 µm, plus préférentiellement supérieure à 15 µm pour entrainer l'air présent dans ladite cavité.

11. Etage selon l'une des revendications 1 à 10, **caractérisé en ce que** la distance D3 entre les extrémités intérieures des aubes statoriques (26, 126) et le rotor est égale à l'épaisseur des couches de matériaux abradables (30, 130) mesuré au droit des léchettes (32, 132), préférentiellement la distance D3 est sensiblement supérieure à l'épaisseur des couches de matériaux abradable, préférentiellement encore la distance D3 est comprise entre 0,50 mm et 5,00 mm.

12. Turbomachine axiale, telle qu'un turbopropulseur, comprenant un compresseur (4 ; 6) avec au moins un étage de compression, **caractérisé en ce que** le ou au moins un étage de compression est conforme à l'une des revendications 1 à 11.

13. Turbomachine selon la revendication 12, **caractérisée en ce qu'**elle comprend un carter cylindrique s'étendant axialement le long du rotor, le rotor (12) comprend un tambour monobloc et le carter comprend essentiellement deux demi-coquilles, ou le rotor (112) et le carter comportent tous deux des segments axiaux assemblés axialement.

## Patentansprüche

1. Kompressionsstufe einer axialen Turbomaschine (2), die Folgendes umfasst:
- einen Rotor (12; 112), der auf seiner Außenfläche mindestens zwei Scheibchen (32; 132) aufweist, die jeweils eine ringförmige radiale Rippe bilden und
- einen Gleichrichter, der Folgendes beinhaltet:
∘ eine ringförmige Anordnung von sich im Wesentlichen radial erstreckenden Statorschaufeln (26; 126) und
∘ eine innere Hülse (28; 128), deren radialer Abschnitt einen mittleren Abschnitt (40; 140) beinhaltet, der mit den inneren Enden der Schaufeln (26; 126) verbunden ist, einen seitlichen Abschnitt (42; 142), der sich auf jeder Seite des mittleren Abschnitts zu jeweils einer der mindestens zwei Scheibchen (32; 132) erstreckt und dadurch einen ringförmigen Hohlraum mit dem Rotor bildet,
**dadurch gekennzeichnet, dass**
die Hülse und der Rotor so konfiguriert sind, dass der radiale Querschnitt des ringförmigen Hohlraums (38; 138) eine Länge L1 und eine Höhe H aufweist, wobei die Länge L1 größer als die Höhe H ist und
jeder der Seitenabschnitte (42; 142) einen axialen Unterabschnitt (43; 143) aufweist, wobei sich die Unterabschnitte (43; 143) in entgegengesetzten Richtungen bis zu den Scheibchen (32; 132) erstrecken, und/oder sich die Seitenabschnitte (42; 142) vom zentralen Abschnitt zum Rotor voneinander entfernen.

2. Stufe nach Anspruch 1, **dadurch gekennzeichnet, dass** die Länge L1 des ringförmigen Hohlraums (38; 138) mehr als doppelt, vorzugsweise dreimal die Höhe H des Hohlraums ist.

3. Stufe nach einem der Ansprüche 1 und 2, **dadurch gekennzeichnet, dass** die innere Hülse (28; 128) aus Verbundwerkstoff besteht.

4. Stufe nach einem der Ansprüche 1 bis 3, **dadurch gekennzeichnet, dass** die Höhe H des ringförmigen Hohlraums (38; 138) über den größten Teil ihrer Länge konstant ist, vorzugsweise über mehr als 70 % seiner Länge, besser über mehr als 80 %.

5. Stufe nach einem der Ansprüche 1 bis 4, **dadurch gekennzeichnet, dass** die Enden der Seitenabschnitte (38; 138) innere Ringnuten aufweisen, die zur Aufnahme einer Schicht aus abriebfestem Material (30; 130) ausgebildet sind, wobei vorzugsweise die Ringnuten Abschnitte aus umgedrehten "U" oder umgekehrten "L" aufweisen, wobei die Stufe vorzugsweise Schichten aus abriebfestem Material (30; 130) aufweist, die in den Ringnuten angeordnet sind.

6. Stufe nach einem der Ansprüche 1 bis 5, **dadurch gekennzeichnet, dass** sich die inneren Enden der Schaufeln (26; 126) ins Innere der inneren Hülse (26; 126) erstrecken.

7. Stufe nach einem der Ansprüche 1 bis 6, **dadurch gekennzeichnet, dass** der Rotor (112) einen Steg mit einem Drehprofil aufweist, der einen ersten Abschnitt (134) enthält, der gegenüber der Innenfläche der Hülse (128) angeordnet ist und einen zweiten Abschnitt (136), der gegenüber dem ersten Abschnitt (134) angehoben und als Halterung für die Befestigung einer ringförmigen Reihe von Rotorschaufeln (124) ausgebildet ist, und eine Verbindung (135), die den ersten Abschnitt (134) mit dem zweiten Abschnitt (136) verbindet, wobei der zweite Abschnitt (136) zumindest teilweise axial einen der Seitenabschnitte (142) der inneren Hülse bedeckt, wobei der Steg vorzugsweise einen dritten Abschnitt (137) umfasst, der gegenüber dem ersten Abschnitt und gegenüber dem zweiten Abschnitt erhöht ist, wobei der dritte Abschnitt (137) den anderen der beiden Seitenabschnitte (142) der Hülse zumindest teilweise axial bedeckt.

8. Stufe nach Anspruch 7, **dadurch gekennzeichnet, dass** sich einer der Seitenabschnitte (142) in einem Abstand D2 axial zur Verbindung (135) erstreckt, wobei vorzugsweise die Verbindung (135) eine erste Verbindung (135) ist und das Profil des Rotorstegs eine zweite Verbindung (135) gegenüber der ersten Verbindung (135) in Bezug auf die innere Hülse (128) umfasst, wobei sich der andere der beiden Seitenabschnitte (142) der Hülse in einem Abstand D2 axial zum zweiten Übergang (135) erstreckt.

9. Stufe nach einem der Ansprüche 1 bis 8, **dadurch gekennzeichnet, dass** die Höhe der Scheibchen (32, 132) weniger als 50 %, vorzugsweise 30 %, vorzugsweise 15 % der Höhe der Seitenabschnitte (42, 142) der Hülse beträgt.

10. Stufe nach einem der Ansprüche 1 bis 9, **dadurch gekennzeichnet, dass** die Außenfläche des den ringförmigen Hohlraum (38; 138) bildenden Rotors (12, 112) eine Rauheit Ra von mehr als 2 µm, vorzugsweise mehr als 6,4 µm, besser mehr als 15 µm aufweist, um die in dem Hohlraum vorhandene Luft mitzuführen.

11. Stufe nach einem der Ansprüche 1 bis 10, **dadurch gekennzeichnet, dass** der Abstand D3 zwischen den inneren Enden der Statorschaufeln (26, 126) und dem Rotor gleich der Dicke der Schichten aus abriebfesten Materialien (30, 130) ist, gemessen rechts der Scheibchen (32, 132), wobei vorzugsweise der Abstand D3 wesentlich größer als die Dicke der Schichten aus abriebfestem Material ist und vorzugsweise auch der Abstand D3 zwischen 0,50 mm und 5,00 mm beträgt.

12. Axiale Turbomaschine, wie beispielsweise ein Turboprop, umfassend einen Kompressor (4; 6) mit mindestens einer Verdichtungsstufe, **dadurch gekennzeichnet, dass** die oder mindestens eine Verdichtungsstufe einem der Ansprüche 1 bis 11 entspricht.

13. Turbomaschine nach Anspruch 12, **dadurch gekennzeichnet, dass** sie ein zylindrisches Gehäuse umfasst, das sich axial entlang des Rotors erstreckt, der Rotor (12) eine Monoblocktrommel umfasst und das Gehäuse im Wesentlichen zwei Halbschalen umfasst, oder sowohl der Rotor (112) als auch das Gehäuse axial montierte axiale Segmente umfassen.

## Claims

1. Compressor stage of an axial turbomachine (2), comprising:
- a rotor (12, 112) with, on its outer surface, at least two lip seals (32, 132) each forming a radial annular rib; and
- a stator which comprises :
∘ an annular ring of stator blades (26, 126) extending essentially radially;
∘ an inner shell (28, 128) whose radial cross section comprises a central part (40, 140) connected to the inner tips of the blades (26, 126), a lateral part (42, 142) extending on each side of the central part to at least one of two lip seals (32, 132), respectively, thus forming an annular cavity with the rotor;
**characterized in that**
the shell and the rotor are configured so that the radial section of the annular cavity (38, 138) has a length L1 and a height H, the length L1 being greater than the height H; and
each of the lateral parts (42, 142) comprises an axial sub-part (43, 143), the said sub-parts (43, 143) extending in opposite directions to their respective lip seals (32, 132), and/or the lateral parts (42, 142) diverge from each other from the central part towards the rotor.

2. Stage in accordance with Claim 1, **characterized in that** the length L1 of the annular cavity (38, 138) is greater than twice, preferably three times the height H of the said cavity.

3. Stage in accordance with one of Claims 1 and 2, **characterized in that** the inner shell (28, 128) is made of composite material.

4. Stage in accordance with one of Claims 1 to 3, **characterized in that** the height H of the annular cavity (38; 138) is constant over most of its length, preferably over 70% of its length, more preferably over 80%.

5. Stage in accordance with one of Claims 1 to 4, **characterized in that** the ends of the lateral parts (38, 138) have inner annular grooves designed to house a layer of abradable material (30, 130); preferably the annular grooves have inverted "U" or "L" sections; preferably the stage comprises layers of abradable material (30, 130) fitted in the annular grooves.

6. Stage in accordance with one of Claims 1 to 5, **characterized in that** the inner tips of the blades (26, 126) extend inside the internal shell (26, 126).

7. Stage in accordance with one of Claims 1 to 6, **characterized in that** the rotor (112) has a wall with a profile of revolution which comprises a first part (134) located opposite the inner surface of the shell (128) and a second part (136) raised relative to the first part (134), designed to provide support for fixing an annular rotor blade row (124) and a joint (135) connecting the first part (134) to the second part (136), the second part (136) at least partially axially overlapping one of the lateral parts (142) of the inner shell, the wall preferably comprising a third part (137) raised relative to the first part and opposite the second part, the said third part (137) axially overlapping at least partially the other of the two lateral parts (142) of the shell.

8. Stage in accordance with Claim 7, **characterized in that** the lateral parts (142) extend axially up to the joint (135) at a distance D2, preferably the joint (135) is a first joint (135) and the profile of the rotor wall comprises a second joint (135) opposite the first joint (135) relative to the inner shell (128), the other one of the two lateral parts (142) of the shell extending axially to the second joint (135) at a distance D2.

9. Stage in accordance with one of Claims 1 to 8, **characterized in that** the height of the lip seals (32, 132) is less than 50%, preferably 30%, more preferably 15% of the height of the lateral parts (42, 142) of the shell.

10. Stage in accordance with one of Claims 1 to 9, **characterized in that** the outer surface of the rotor (12, 112) forming the annular cavity (38, 138) has a roughness Ra greater than 2 microns, preferably greater than 6.4 microns, more preferably greater than 15 microns to cause air to be drawn into the said cavity.

11. Stage in accordance with one of Claims 1 to 10, **characterized in that** the distance D3 between the inner tips of the stator blades (26, 126) and the rotor is equal to the thickness of the layers of abradable materials (30, 130) measured at the lips seals (32, 132); preferably the distance D3 is substantially greater than the thickness of the layers of abradable materials; preferably the distance D3 is between 0.50 mm and 5.00 mm.

12. Axial turbomachine, such as a turboprop, comprising a compressor (4, 6) with at least one compression stage, **characterized in that** the or at least one compression stage is in accordance with one of Claims 1 to 11.

13. Turbomachine in accordance with Claim 12, **characterized in that** the turbomachine includes a cylindrical housing extending axially along the length of the rotor, the rotor (12) comprises a one-piece drum and the housing essentially comprises two half-shells, or the rotor (112) and the housing both comprise axial segments assembled axially.
